# EUROPEAN PATENT SPECIFICATION

(11) **EP 2 785 561 B1**
(45) Date of publication and mention of the grant of the patent: **08.05.2019**
(21) Application number: 12787038.4
(22) Date of filing: 26.10.2012
(51) Int. Cl.: B60P 1/04

(54) **DETERMINING THE RELATIVE ORIENTATION OF MEMBERS OF AN ARTICULATED WORK MACHINE**
BESTIMMUNG DER RELATIVEN ORIENTIERUNG VON ELEMENTEN EINER GELENKIGEN ARBEITSMASCHINE
DÉTERMINATION DE L'ORIENTATION RELATIVE DES ÉLÉMENTS D'UN ENGIN DE TRAVAUX ARTICULÉ

(30) Priority: 02.12.2011 GB 201120766
(43) Date of publication of application: 08.10.2014
(73) Proprietor: Caterpillar SARL, 1208 Geneva (CH)
(72) Inventor: THOMPSON, Stephen, Tyne nd Wear, Sunderland SR3 2NT (GB); MCCANN, Gerard, Owen, Dunlap, IL 61525 (US); HIGDON, David, Brion, East Peoria, IL 61611 (US)
(74) Representative: BRP Renaud & Partner mbB Rechtsanwälte Patentanwälte Steuerberater
(86) International application number: PCT/GB2012/000801
(87) International publication number: WO 2013/079894

(56) References cited:
- EP-A2- 2 172 364
- WO-A1-2006/093438
- WO-A1-2007/013990
- US-A- 5 742 228

## Description

### Technical Field

This disclosure is directed towards determining the relative orientation of two members of an articulated work machine utilising inertia sensors by referencing the output from inertia sensors mounted on the members to one another.

### Background

Articulated work machines, including articulated trucks with bodies, articulated trucks with ejector mechanisms, articulated wheel loaders and the like, typically comprise a first frame (such as a tractor) and a second frame (such as a trailer) connected to one another via an articulation joint. The articulation joint enables the frames to roll and yaw relative to one another. Articulated work machines are commonly employed during construction and excavation and may be operated on uneven terrain. As a result, one of the frames may be positioned at an unsafe roll and/or yaw angle and may cause the entire machine to turn over. Alternatively, if the articulated machine has an open container, such as a bucket or body mounted on one of the frames, any materials held in the open container may fall out when one of the frames is positioned above certain roll and/or yaw angle thresholds.

Furthermore, since the roll and yaw angles of one frame are independent of the other frame, the operator may be unaware of the angles at which the frame in which he/she is not located are orientated. The operator may, therefore, be unaware that part of the articulated vehicle is at an unsafe roll and/or yaw angle or may have tipped over.

In many articulated vehicles one of the frames, usually the trailer, may have a body which is movable relative to the frame. One example is a tipping body which can be raised off the trailer chassis to tip out the contents. Currently a switch signal is used to warn the operator that the body is raised off the trailer chassis and provides the operator with information regarding the number of body raise cycles per predefined time interval, e.g. a working shift. With the current arrangement the angle of the body cannot be determined.

One method of preventing tip over of an articulated vehicle is to measure the angle of the vehicle and provide a warning to the operator when the roll and/or yaw angles of the vehicle are approaching unsafe threshold values, above which the vehicle will tip over. US-B-5825284 discloses one such method. The vehicle described therein comprises a tractor and a trailer, the trailer comprising a frame attached to an axle. One sensor is attached to the frame to detect the roll angle of the frame and a second sensor is attached to the axle to detect the roll angle of the axle. The difference between these two roll angles is utilised to determine the angle between the frame and the axle and thereby calculate the roll moment of the vehicle. A display is then used to indicate to the operator if the roll moment is sufficient such that the vehicle may roll over.

Articulated work machines may also comprise a member such as a body for holding material which can be tipped about a pivot point to empty any material held therein. When the body is tipped, the centre of gravity of the frame to which the body is attached may be raised further from the ground. As a result, the threshold values of the roll and/or yaw angles at which the frame tips over may change, and the frame may be more prone to tipping over.

US-B-5742228 discloses a system for detecting the roll and pitch of a tipper truck which comprises a tipper body. One or more level sensors, such as clinometers, are attached to the tipper body. The sensors detect the lateral level (i.e. roll angle) of the tipper truck and the longitudinal level (i.e. pitch angle) of the tipper body. A processor utilises the outputs of the one or more sensors to determine the risk of the tipper truck overturning and then display such a risk to an operator.

However, US-B-5742228 and US-B-5825284 do not disclose a means by which the orientation of one frame of an articulated work machine can be determined in relation to the other frame.

Document WO 2006/093438 A1 discloses an articulated work machine according to the preamble of independent claim 1.

### Summary

The disclosure therefore provides an articulated work machine comprising; a first frame; a second frame comprising a body and a chassis, the body pivotally connected to the chassis; the first and second frames being connected by a coupling and being movable relative to each other in at least one direction; a first multi-axis inertia sensor attached to the first frame providing an output relating to the position of the first frame; a second multi-axis inertia sensor attached to the body providing an output relating to the position of the body; and a controller which compares the outputs of the first and second multi-axis inertia sensors to calculate the position of the body and the first frame relative to each other.

The disclosure also provides a method of determining the relative position of members of an articulated work machine, the articulated work machine comprising; a first frame to which a first multi-axis inertia sensor is attached; a second frame comprising a body and a chassis, the body pivotally connected to the chassis; a second multi-axis inertia sensor being attached to the body; the first and second frames being connected by a coupling and being movable relative to each other in at least one direction; the method comprising the steps of: comparing the outputs of the first and second multi-axis inertia sensors to calculate the position of the body and the first frame relative to each other.

By way of example only, embodiments of an apparatus and method for the detection of the orientation of the frames of an articulated work machine are now described with reference to, and as shown in, the accompanying drawings.

### Brief Description of the Drawings

Figure 1 is a side elevation of one embodiment of an articulated work machine of the present disclosure;
Figure 2 to 9 illustrate the pitch and roll angles of the first and second frames of the articulated work machine; and
Figure 10 is flow diagram illustrating the decision steps of the warning system.

### Detailed Description

The present disclosure is generally directed towards an apparatus and method for determining the orientation of at least two members of an articulated work machine and their orientation relative to each other. Inertia sensors are attached to two members of the articulated work machine and the output of each inertia sensor is referenced to either the output of the other inertia sensor or a calibrated position parameter, to calculate the orientation of each member in reference to the orientation of the other member.

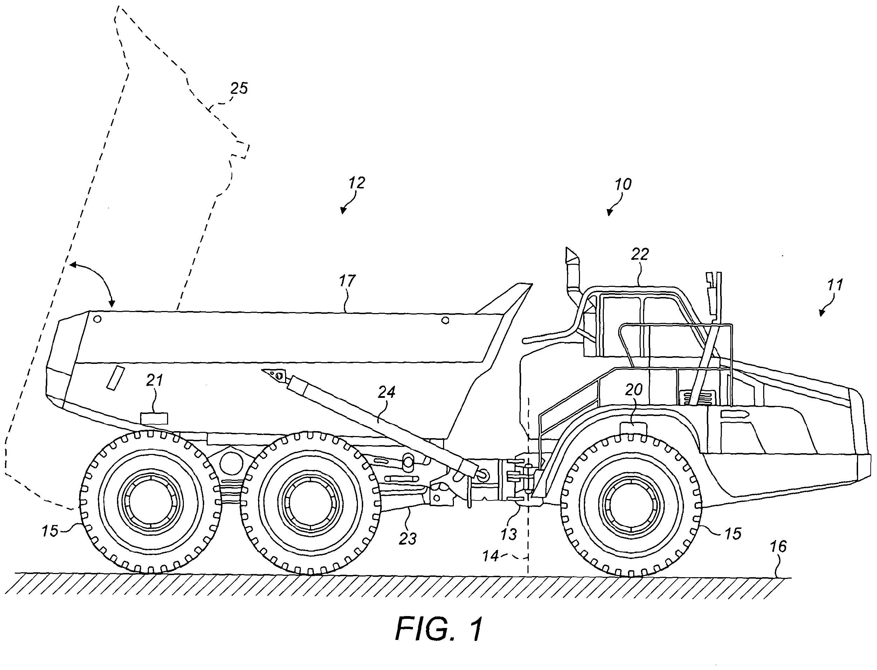

Figure 1 illustrates an embodiment of an articulated work machine 10 of the present disclosure. Although the illustrated articulated work machine 10 is an articulated tipper truck, the articulated work machine 10 may be any type of articulated work machine. The articulated work machine 10 comprises a first frame 11 in the form of a tractor unit, attached to a second frame 12, in the form of a trailer unit, by a coupling 13.

The coupling 13, which may be an articulation joint, may allow each of the frames 11, 12 to be orientated at a different yaw and/or roll angle to the other frame 12, 11. The yaw angle of the first frame 11 may be different to the yaw angle of the second frame 12 about an axis of articulation 14. The articulated work machine 10 may be steered by adjusting the yaw angle of the first and second frames about the axis of articulation 14 utilising actuators, for example hydraulic cylinders, suitably attached to each of the frames 11, 12 on either side of the coupling 13.

The articulated work machine 10 may further comprise driving means. The driving means comprise ground engaging means 15 in contact with ground 16. The ground engaging means 15 may be, for example, tracks and/or wheels which enable the machine 10 to move along the ground 16, and the articulated work machine 10 may comprise any number of ground engaging means 15. The driving means may further comprise a power unit (not shown) which drives at least one of the ground engaging means 15 to move the articulated work machine 10 along the ground 16. The power unit may be of any suitable type, such as an internal combustion engine, a micro-turbine or an electric motor. In one embodiment, the power unit is situated in/on one of the frames 11, 12 and the coupling 13 transfers power from the power unit to ground engaging means 15 attached to the other frame 12, 11. Therefore, the ground engaging means 15 is/are operably connected to, i.e. receives power from, the power unit. In a further embodiment, all of the ground engaging means 15 of the articulated work machine 10 are operably connected to the power unit.

The second frame 12 may comprise a member, such as an dump(or ejector) body 17 adapted to carry a load. and which is pivotally attached to a chassis 23 at a pivot point. The second frame 12 comprises a tipping system 24 which, when activated, causes the body 17 to rotate about the pivot from a "body down" position into a "body up" position 25, which is a tipping position with one end of the body 17 raised upwardly from the chassis 23 and the other end of the body 17 lowered relative to the chassis 23. The tipping system 24 may be any suitable system, such as, for example, a hydraulic system with one or more hydraulic actuators connected between the body 17 and the chassis 23, a mechanical system or an electric system. As the tipping system 24 rotates the body 17 to the body up position 25, the body 17 ejects any materials or load from the body 17. The body 17 may be any type of container and may be open at the top, fully enclosed or partially enclosed. The body 17 may comprise a gate or door which opens to allow the load or material to be tipped out as the body 17 is rotated into the tipping position 25.

One frame, for example the first frame 11 as illustrated in Figure 1, may comprise an operator cabin 22 housing the controls for the machine 10.

The articulated work machine 10 further comprises a first multi-axis inertia sensor 20 attached to the first frame 11 and a second multi-axis inertia sensor 21 attached to the body 17 mounted on the second frame 12. The sensor 20 may be attached to any part of the first frame 11 and this acts as the reference sensor. In the illustrated embodiment the second multi-axis inertia sensor 21 may be attached close to the pivoting point between the body 17 and the chassis 23. This enables the length of any wiring leading to the second multi-axis inertia sensor 21 from the chassis 23 to be reduced.

The sensors 20, 21, may be any type of sensor which is capable of determining the pitch, yaw and/or roll angle of the members (i.e. first frame 11 and body 17 in the illustrated example), on which the sensor is positioned relative to the direction of gravitational acceleration. Each of the sensors 20, 21, may be, for example, an inclination sensor, an accelerometer or a gyroscope, and may be of any type, for example, piezoelectric, capacitive, potentiometric, Hall effect, magnetoresistive, piezoresistive or any type of microelectromechanical system (MEMS).

These sensors generally comprise a "proof" mass. This mass moves relative to the frame of the sensor. That difference in movement between the frame and proof mass is related to its acceleration and can be measured in a variety of ways: capacitively, piezo-electrically, and piezo-resistively. A solid object's movement can be fully described by measuring linear acceleration in the x, y, and z directions and angular velocity about the x, y, and z axes.

The work machine 10 further comprises an electronic controller (commonly known as an electronic control module or ECM) which controls various aspect of the work machine 10. The output signals from the sensors 20, 21 are transmitted to the controller and used to calculate relative angles of the members to which the sensors 20,21 are attached, e.g. the angle of the body 17 relative to the first frame 11. The calculations may relate to both fore and aft angles (in the lateral direction of the machine 10) and side to side (across the transverse direction of the machine 10). This is described in more detail below.

In order for the load or materials to be ejected from the body 17 it may not be designed to move relative to the chassis 23, but may instead utilise an ejector mechanism. Ejector mechanisms are well known in the art, and typically comprise an ejector plate which slides horizontally from one end of the inside of the body 17 towards the other end (the ejection end) to push any load or materials out of the body 17. A hydraulic actuator or the like may be used to move the ejector plate towards the ejection end of the body 17.

In such an embodiment the first multi-axis inertia sensor 20 is again positioned on the first frame 11 and the second multi-axis inertia sensor 21 is attached to the body 17.

### Industrial Applicability

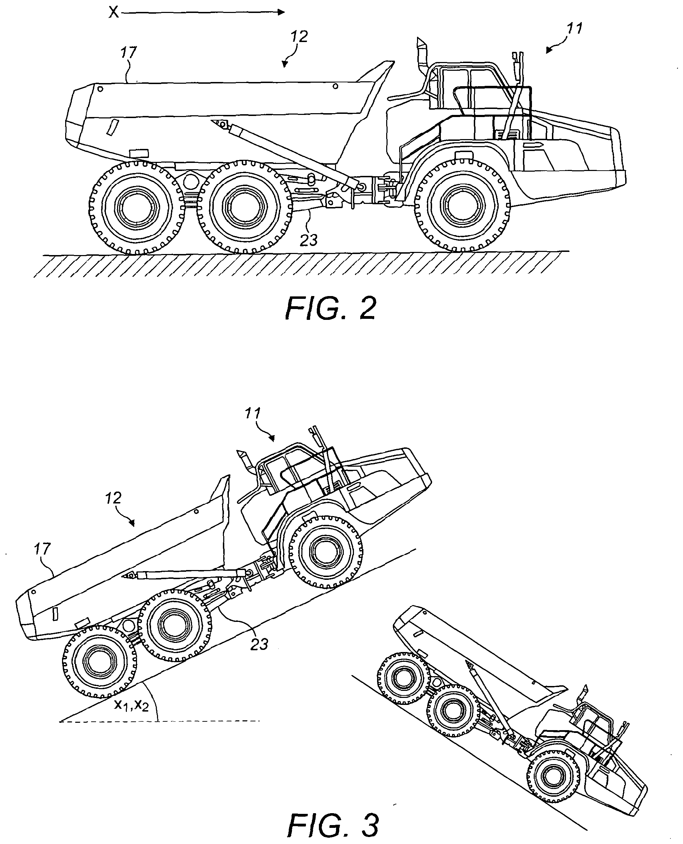

Figures 2 to 9 illustrate some possible orientations of a work machine 10 and the relative angles of the first member (in this case the tractor (which forms the first frame 11) and the second member (in this case the body 17 mounted on the trailer chassis 23 of the second frame 12) using the embodiment of Figure 1. Essentially the relative body angle of the body 17 to the tractor is the absolute angle minus the tractor angle. This applies to both the pitch and the roll angles.

Figure 2 - the body 17 is in the body down position on the chassis 23 and the tractor and trailer 11,12 are in horizontal lateral alignment (i.e from one end of the tractor 11 to the opposing end of the trailer 12, which is shown by the arrow x). The relative body pitch angle (x₁) = tractor pitch angle (x₂) = 0° as the absolute body angle (x₃) is 0°.

Figure 3 - the body 17 is in the body down position and the tractor and trailer 11,12 are in lateral alignment, but at an angle to the horizontal in the x direction, so the relative body pitch angle (x₁) = tractor pitch angle (x₂) as the absolute body angle (x₃) is 0°.

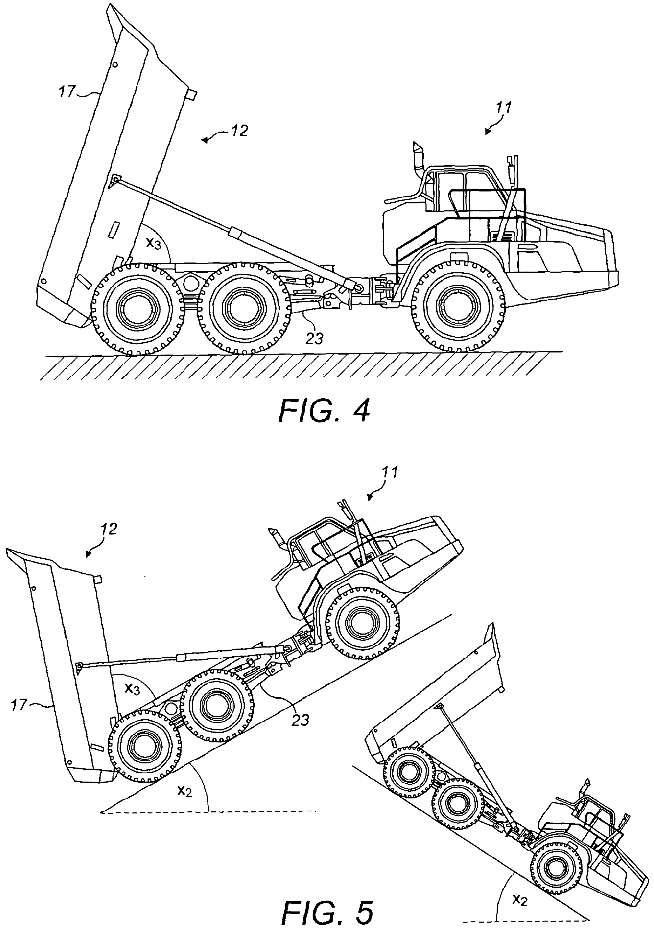

Figure 4 - the body 17 is in the body up position and the tractor and trailer 11,12 are in horizontal lateral alignment, so the relative body pitch angle (x₂) = absolute body angle (x₃) - tractor pitch angle (x₂);
Figure 5 - the body 17 is in the body up position and the tractor and trailer 11,12 are in lateral alignment at an angle to the horizontal, so the relative body pitch angle (x₁) = absolute body angle (x₃) - tractor pitch angle (x₂);

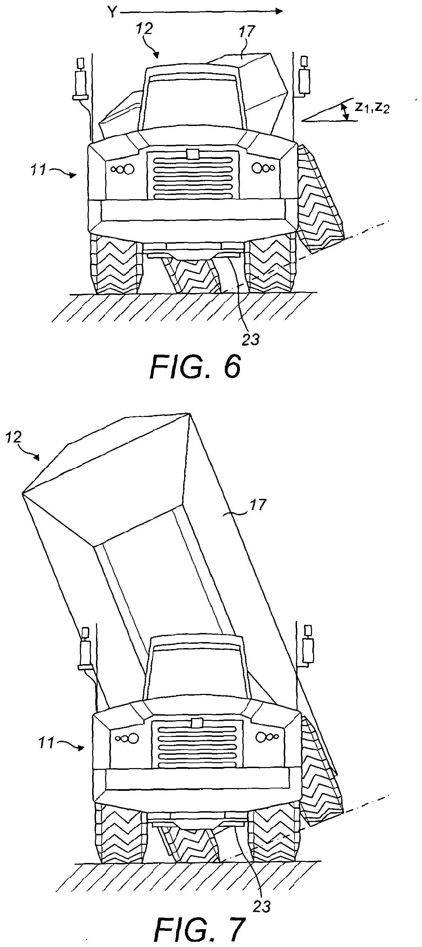

Figure 6 - the body 17 is in the body down position and the tractor and trailer 11,12 are in horizontal transverse alignment (i.e. from one side of the tractor and trailer 11,12 to the opposing side which is shown by the arrow y) and horizontal lateral alignment, so the relative body pitch angle (x₁) = tractor pitch angle (x₂) as the absolute body angle (x₃) is 0°. However the body 17 is tilted sideways relative to the frame 11, so the relative body roll angle (z₁) = absolute body angle (z₃) as the tractor roll angle (z₂) is 0°;
Figure 7 - the body 17 is in the body up position and is in lateral alignment with the trailer 23 so the body pitch angle (x₁) = body angle (x₃) - first frame pitch angle (x₂). However the trailer 23 is also tilted sideways relative to the tractor 11, so the relative body roll angle (z₁) = absolute body angle (z₃) as the tractor roll angle (z₂) is 0°.

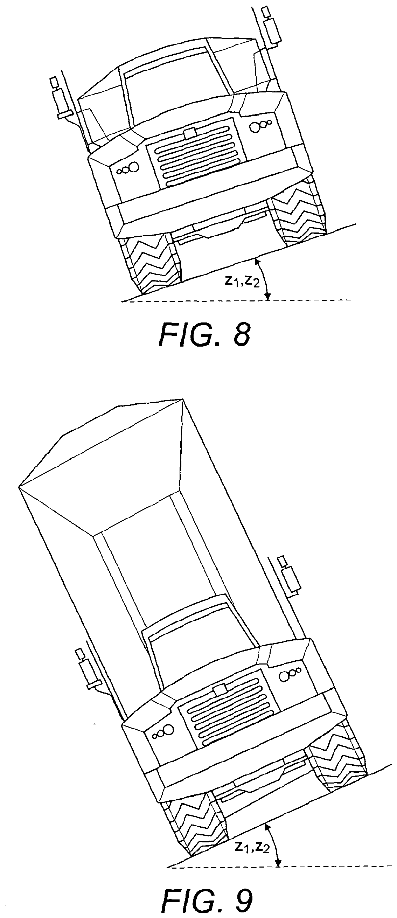

Figure 8 - the body 17 is in the body down position and the tractor and trailer 11,12 are in lateral and transverse alignment, although the whole machine 10 is on a side slope, at an angle to the horizontal in the y direction, so the relative body pitch angle (x₁) = tractor pitch angle (x₂) as the absolute body pitch angle (x₃) is 0°. The relative body roll angle (z₁) is 0° as the absolute body roll angle (z₃) is the same as the tractor roll angle (z₂).

Figure 9 - the body 17 is in the body up position and the tractor and trailer 11,12 are in horizontal and lateral alignment, although the whole machine 10 is on a side slope, at an angle to the horizontal in the y direction so the relative body pitch angle (x₁) = body angle (x₃) - first frame pitch angle (x₂). The tractor 11, body 17 and the chassis 23 are all tilted at the same angle in the y direction, so the relative body roll angle (z₁) is 0° as the absolute body roll angle (z₃) is the same as the tractor roll angle (z₂).

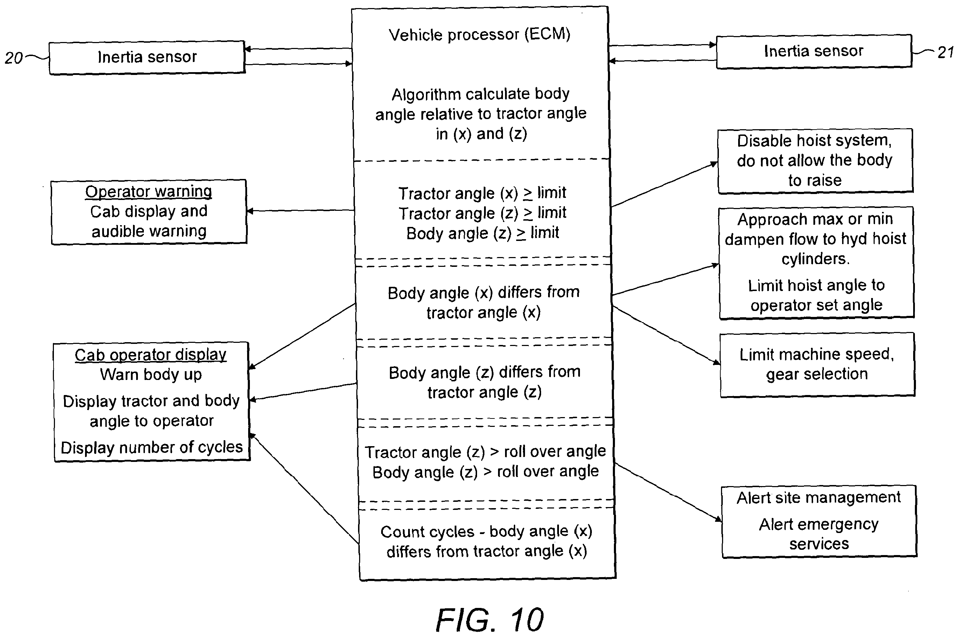

This angle information may be utilized by the controller in an algorithm, which allows the operator and manufacturer to set safety limits for the various angles. Figure 10 illustrates the decision steps which may be made by such an algorithm. Once the individual positions (angles) of the two members on which the sensors 20, 21 are mounted have been determined, the controller is able to calculate the relative angles between them. The calculation may be achieved by comparing the outputs of the two sensors 20,21 with each other, or with a calibrated position parameter. The actual and relative angles may then be compared to the preset limits for the various angles. In the event that certain of the preset limits are exceeded the controller may be programmed to disable the tipping system 24, to limit the body angle (x₃) to which the body 17 can be tipped, limit the machine speed or gear selection, provide a warning or display or an emergency alert. These may include:-
- Body up
- Body raise angle
- The number of cycles in which the measured angles differ from each other in a defined time interval
- Relative angles of the first and second members with a warning of potential roll over if any of the angles exceed the preset limits
- Relative angles of the first and second members with a warning that the machine 10 is operating/tipping at an unsafe angle, for example on an unsafe side slope

This information can thus be utilized by the controller to:-
- Reduce frame impact stresses by automatically reducing cylinder pressure/flow when the body 17 is approaching the down position
- Reduce cylinder stresses by automatically reducing cylinder flow when the body 17 is approaching the fully raised position
- Notify, via a suitable machine communication system, site management or the emergency services that a machine 10, or either member 11 or 17 has rolled.

The apparatus and method of detecting the state of an articulated work machine can be used in a wide variety of work machines, which have articulated frames (tractor or trailer) and a member mounted on at least one of the frames (body) which can move relative to each other.

The use of multi-axis inertia sensors 20,21 allows for enhanced functionality over the prior art, i.e. roll over warning, warning against operating/ tipping on an unsafe side slop, and further provides installation, reliability and durability benefits. In particular the system provides improved information for the operator and improved safety.

## Claims

1. An articulated work machine (10) comprising;
a first frame (11);
a second frame (12) comprising a body (17) and a chassis (23), the body (17) pivotally connected to the chassis (23);
the first and second frames (11, 12) being connected by a coupling (13) and being movable relative to each other in at least one direction;
**characterised in that** the articulated work machine further comprises:
a first multi-axis inertia sensor (20) attached to the first frame (11) providing an output relating to the position of the first frame (11);
a second multi-axis inertia sensor (21) attached to the body (17) providing an output relating to the position of the body (17); and
a controller which compares the outputs of the first and second multi-axis inertia sensors (20, 21) to calculate the position of the body (17) and the first frame (11) relative to each other.

2. An articulated work machine (10) as claimed in claim 1 wherein the second frame (12) further comprises means (24) for raising the body (17) off the chassis (23) about the pivot point to a tipping angle.

3. An articulated work machine (10) as claimed in claim 2 wherein the means (24) for raising the body (17) comprises a hydraulic system.

4. An articulated work machine (10) as claimed in any one of the preceding claims in which the first and second frames (11, 12) are movable relative to each other so as to be orientated at a different pitch or roll angle to each other.

5. An articulated work machine (10) as claimed in any one of the preceding claims in which at least one of the first and second multi-axis inertia sensors (20, 21) is an inclination sensor.

6. An articulated work machine (10) as claimed in any one of the preceding claims in which the first and second multi-axis inertia sensors (20, 21) measure the pitch and/or roll angles of the frame (11, 12) to which it is attached.

7. An articulated work machine (10) as claimed in claim 6 in which the controller calculates the relative pitch and/or roll angles of the frames (11, 12) relative to using the measured pitch and/or roll angles respectively.

8. An articulated work machine (10) as claimed in claim 10 or claim 11 wherein the controller is programmed with preset limits for the relative and measured pitch and roll angles of at least one of the frames (11, 12) and the controller compares the relative and measured angles with the preset limits.

9. A method of determining the relative position of members of an articulated work machine (10), the articulated work machine (10) comprising;
a first frame (11) to which a first multi-axis inertia sensor (20) is attached;
a second frame (21) comprising a body (17) and a chassis (23), the body (17) pivotally connected to the chassis (23); a second multi-axis inertia sensor (21) being attached to the body (17);
the first and second frames (11, 12) being connected by a coupling (13) and being movable relative to each other in at least one direction;
the method comprising the steps of:
comparing the outputs of the first and second multi-axis inertia sensors (20, 21) to calculate the position of the body (17) and the first frame (11) relative to each other.

10. A method as claimed in claim 9 comprising the steps of measuring the absolute pitch and roll angles of the first and second frames (11, 12) using the first and second multi-axis inertia sensors (20, 21).

11. A method as claimed in claim 10 in which the controller calculates the relative pitch and/or roll angles of the frames (11, 12) relative to each other using the measured pitch and/or roll angles respectively.

12. A method as claimed in claim 10 or claim 11 comprising the steps of comparing the measured and calculated angles with preset limits.

13. The method according to any one of claims 9 to 12 wherein the number of cycles in which the absolute angle of the first frame (11) differs from the absolute angle of the second frame (12) over a predetermined time period is stored in a computer memory.

14. The method according to any one of claims 9 to 13 in which the controller is programmed to provide a warning signal to the operator if any of the relative or measured angles exceeds the preset limit.

15. The method according to any one of claims 9 to 14 in which the controller is programmed to modify the operation of the machine (10) if any of the relative or measured angles exceeds the preset limit.

## Patentansprüche

1. Gelenkige Arbeitsmaschine (10), umfassend:
einen ersten Rahmen (11);
einen zweiten Rahmen (12), umfassend einen Körper (17) und ein Fahrwerk (23), wobei der Körper (17) drehbar mit dem Fahrwerk (23) verbunden ist;
wobei der erste und zweite Rahmen (11, 12) durch eine Kupplung (13) verbunden sind und in Bezug aufeinander in mindestens eine Richtung bewegbar sind;
**dadurch gekennzeichnet, dass** die gelenkige Arbeitsmaschine weiter umfasst:
einen ersten Multiachsenträgheitssensor (20), der an den ersten Rahmen (11) befestigt ist, der eine Ausgabe bereitstellt, die sich auf die Position des ersten Rahmens (11) bezieht;
einen zweiten Multiachsenträgheitssensor (21), der an den Körper (17) befestigt ist, der eine Ausgabe bereitstellt, die sich auf die Position des Körpers (17) bezieht; und
eine Steuerung, die die Ausgaben des ersten und zweiten Multiachsenträgheitssensors (20, 21) vergleicht, um die Position des Körpers (17) und des ersten Rahmens (11) in Bezug aufeinander zu berechnen.

2. Gelenkige Arbeitsmaschine (10) nach Anspruch 1, wobei der zweite Rahmen (12) weiter Mittel (24) zum Anheben des Körpers (17) vom Fahrwerk (23) um den Drehpunkt zu einem Kippwinkel umfasst.

3. Gelenkige Arbeitsmaschine (10) nach Anspruch 2, wobei das Mittel (24) zum Anheben des Körpers (17) ein Hydrauliksystem umfasst.

4. Gelenkige Arbeitsmaschine (10) nach einem der vorstehenden Ansprüche, bei der der erste und zweite Rahmen (11, 12) in Bezug aufeinander bewegbar sind, um in einem unterschiedlichen Steigungs- oder Rollwinkel zueinander ausgerichtet zu sein.

5. Gelenkige Arbeitsmaschine (10) nach einem der vorstehenden Ansprüche, bei der mindestens einer von dem ersten und zweiten Multiachsenträgheitssensor (20, 21) ein Neigungssensor ist.

6. Gelenkige Arbeitsmaschine (10) nach einem der vorstehenden Ansprüche, bei der der erste und zweite Multiachsenträgheitssensor (20, 21) die Steigungs- und/oder Rollwinkel des Rahmens (11, 12) messen, an den sie befestigt sind.

7. Gelenkige Arbeitsmaschine (10) nach Anspruch 6, bei der die Steuerung die relativen Steigungs- und/oder Rollwinkel der Rahmen (11, 12) in Bezug auf die Verwendung der jeweiligen gemessenen Steigungs- und/oder Rollwinkel berechnet.

8. Gelenkige Arbeitsmaschine (10) nach Anspruch 10 oder Anspruch 11, wobei die Steuerung mit voreingestellten Grenzen für die relativen und gemessenen Steigungs- und Rollwinkel von mindestens einem der Rahmen (11, 12) programmiert ist und die Steuerung die relativen und gemessenen Winkel mit den voreingestellten Grenzen vergleicht.

9. Verfahren zum Bestimmen der relativen Position der Elemente einer gelenkigen Arbeitsmaschine (10), wobei die gelenkige Arbeitsmaschine (10) umfasst:
einen ersten Rahmen (11), an den ein Multiachsenträgheitssensor (20) befestigt ist;
einen zweiten Rahmen (21), umfassend einen Körper (17) und ein Fahrwerk (23), wobei der Körper (17) drehbar mit dem Fahrwerk (23) verbunden ist; einen zweiten Multiachsenträgheitssensor (21), der mit dem Körper (17) verbunden ist;
wobei der erste und zweite Rahmen (11, 12) durch eine Kupplung (13) verbunden sind und in Bezug aufeinander in mindestens eine Richtung bewegbar sind;
wobei das Verfahren die folgenden Schritte umfasst:
Vergleichen der Ausgaben des ersten und zweiten Multiachsenträgheitssensors (20, 21), um die Position des Körpers (17) und des ersten Rahmens (11) in Bezug aufeinander zu berechnen.

10. Verfahren nach Anspruch 9, umfassend die Schritte des Messens der absoluten Steigungs- und Rollwinkel des ersten und zweiten Rahmens (11, 12) unter Verwendung des ersten und zweiten Multiachsenträgheitssensors (20, 21).

11. Verfahren nach Anspruch 10, bei dem die Steuerung die relativen Steigungs- und/oder Rollwinkel der Rahmen (11, 12) in Bezug aufeinander unter Verwendung der jeweiligen gemessenen Steigungs- und/oder Rollwinkel berechnet.

12. Verfahren nach Anspruch 10 oder Anspruch 11, umfassend die Schritte des Vergleichens der gemessenen und berechneten Winkel mit voreingestellten Grenzen.

13. Verfahren nach einem der Ansprüche 9 bis 12, wobei die Anzahl von Zyklen, bei der der absolute Winkel des ersten Rahmens (11) sich vom absoluten Winkel des zweiten Rahmens (12) über einen vorbestimmten Zeitraum unterscheidet, in einem Computerspeicher gespeichert wird.

14. Verfahren nach einem der Ansprüche 9 bis 13, bei dem die Steuerung programmiert ist, um dem Betreiber ein Warnsignal bereitzustellen, wenn ein beliebiger der relativen oder gemessenen Winkel die voreingestellte Grenze überschreitet.

15. Verfahren nach einem der Ansprüche 9 bis 14, bei dem die Steuerung programmiert ist, um den Betrieb der Maschine (10) zu modifizieren, wenn ein beliebiger der relativen oder gemessenen Winkel die voreingestellte Grenze überschreitet.

## Revendications

1. Engin de travail articulé (10) comprenant :
un premier cadre (11) ;
un second cadre (12) comprend un corps (17) et un châssis (23), le corps (17) étant raccordé à pivotement au châssis (23) ;
le premier et le second cadre (11, 12) étant raccordés par un couplage (13) et étant mobiles l'un par rapport à l'autre dans au moins une direction ;
**caractérisé en ce que** l'engin de travail articulé comprend en outre :
un premier capteur d'inertie à axes multiples (20) fixé au premier cadre (11) fournissant une sortie en rapport avec la position du premier cadre (11) ;
un second capteur d'inertie à axes multiples (21) fixé au corps (17) fournissant une sortie en rapport avec la position du corps (17) ; et
un dispositif de commande qui compare les sorties du premier et du second capteur d'inertie à axes multiples (20, 21) pour calculer la position du corps (17) et du premier cadre (11) l'un par rapport à l'autre.

2. Engin de travail articulé (10) selon la revendication 1, dans lequel le second cadre (12) comprend en outre un moyen (24) pour relever le corps (17) du châssis (23) autour du point pivot à un angle de basculement.

3. Engin de travail articulé (10) selon la revendication 2, dans lequel le moyen (24) pour relever le corps (17) comprend un système hydraulique.

4. Engin de travail articulé (10) selon l'une quelconque des revendications précédentes, dans lequel le premier et le second cadre (11,12) peuvent être déplacés l'un par rapport à l'autre de manière à être orientés selon un angle de pas ou de roulis différent l'un de l'autre.

5. Engin de travail articulé (10) selon l'une quelconque des revendications précédentes, dans lequel au moins l'un du premier et du second capteur d'inertie à axes multiples (20, 21) est un capteur d'inclinaison.

6. Engin de travail articulé (10) selon l'une quelconque des revendications précédentes, dans lequel le premier et le second capteur d'inertie à axes multiples (20, 21) mesurent les angles de pas et/ou de roulis du cadre (11, 12) auquel il est fixé.

7. Engin de travail articulé (10) selon la revendication 6, dans lequel le dispositif de commande calcule les angles de pas et/ou de roulis relatifs des cadres (11,12) par rapport à l'utilisation des angles de pas et/ou de roulis mesurés, respectivement.

8. Engin de travail articulé (10) selon la revendication 10 ou la revendication 11, dans lequel le dispositif de commande est programmé avec des limites préétablies pour les angles de pas et de roulis relatifs et mesurés d'au moins l'un des cadres (11, 12) et le dispositif de commande compare les angles relatifs et les angles mesurés avec les limites préétablies.

9. Procédé de détermination de la position relative d'éléments d'un engin de travail articulé (10), l'engin de travail articulé (10) comprenant :
un premier cadre (11) auquel un premier capteur d'inertie à axes multiples (20) est fixé ;
un second cadre (21) comprenant un corps (17) et un châssis (23), le corps (17) étant raccordé à pivotement au châssis (23) ; un second capteur d'inertie à axes multiples (21) étant raccordé au corps (17) ;
le premier et le second cadre (11, 12) étant raccordés par un couplage (13) et pouvant être déplacés l'un par rapport à l'autre dans au moins une direction ;
le procédé comprenant les étapes suivantes :
comparaison des sorties des premier et second capteurs d'inertie à axes multiples (20, 21) pour calculer la position du corps (17) et du premier cadre (11) par rapport à l'autre.

10. Procédé selon la revendication 9, comprenant les étapes de mesure des angles de pas et de roulis absolus du premier et du second cadre (11, 12) en utilisant les premier et second capteurs d'inertie à axes multiples (20, 21).

11. Procédé selon la revendication 10, dans lequel le dispositif de commande calcule les angles de pas et/ou de roulis relatifs des cadres (11, 12) l'un par rapport à l'autre en utilisant les angles de pas et/ou de roulis mesurés, respectivement.

12. Procédé selon la revendication 10 ou la revendication 11, comprenant les étapes de comparaison des angles mesurés et calculés avec des limites préétablies.

13. Procédé selon l'une quelconque des revendications 9 à 12, dans lequel le nombre de cycles dans lequel l'angle absolu du premier cadre (11) diffère de l'angle absolu du second cadre (12) sur une période de temps prédéterminée est stocké dans une mémoire d'ordinateur.

14. Procédé selon l'une quelconque des revendications 9 à 13, dans lequel le dispositif de commande est programmé pour fournir un signal d'avertissement à l'opérateur si l'un quelconque des angles relatifs ou mesurés dépasse la limite préétablie.

15. Procédé selon l'une quelconque des revendications 9 à 14, dans lequel le dispositif de commande est programmé pour modifier le fonctionnement de l'engin (10) si l'un quelconque des angles relatifs ou mesurés dépasse la limite préétablie.
